# EUROPEAN PATENT SPECIFICATION

(11) **EP 2 392 212 B1**
(45) Date of publication and mention of the grant of the patent: **24.04.2013**
(21) Application number: 10425189.7
(22) Date of filing: 03.06.2010
(51) Int. Cl.: A21C 1/14, B01F 15/00

(54) **Kneading machine with a device for blocking the tank**
Knetmaschine mit einer Vorrichtung zur Fixierung des Behälters
Malaxeuse avec un dispositif de blocage de la cuve

(43) Date of publication of application: 07.12.2011
(73) Proprietor: SANCASSIANO S.p.A., I-12060 Roddi d'Alba (Cuneo) (IT)
(72) Inventor: Drocco, Davide, 12060 Roddi d'Alba (Cuneo) (IT)
(74) Representative: Frontoni, Stefano

(56) References cited:
- EP-A1- 0 367 950
- DE-A1- 4 002 536
- DE-U1-202008 014 044
- SE-B- 431 152
- US-A- 4 757 890
- US-A- 5 505 575
- US-A1- 2003 053 368
- US-A1- 2004 062 628

## Description

The present invention regards a kneading machine comprising an extractable tank and a device for coupling such tank.

In the prior art kneading machines are known wherein the tank in which the dough is obtained is extractable with respect to the rest of the machine structure, with the aim, for example, of facilitating loading and unloading of material respectively into and from the tank.

Examples of such a machine are known from EP 0 367 950 A1, which discloses a kneading machine according to the preamble of claim 1, SE 431 152 B, DE 20 2008 014 044 U1 and US 2003/053368 A1.

Also known in the prior art are machines for producing dough comprising various work stations and one or more tanks which are moved from one station to another carrying along with themselves the material being processed therein.

In both the abovementioned applications, the machines for producing the dough comprise device for coupling the tanks, adapted to provide a temporary connection between the fixed structures thereof and the tanks associated thereto.

Within such applications, the present invention has the object of providing a device for coupling the tank that is capable of operating automatically, quickly and accurately. The present invention also has the object of providing a device capable of adapting to the various tank introduction and extraction methods provided for in the various types of machines.

The previously described objects are attained by means of a kneading machine having the characteristics of claim 1.

The claims form an integral part of the technical disclosure provided herein in relation to the present invention.

Now, the invention shall be described, purely by way of non-limiting example, with reference to the attached representations, wherein:
- figures 1-3 represent a detaching device according to a first embodiment;
- figures 4 represent details of a detaching device in various embodiments;
- figures 5 represent a detaching device according to a further embodiment;
- figure 6 represents a perspective view of the detaching device in an embodiment.

Illustrated in the following description are various specific details aimed at providing an in-depth understanding of the embodiments. The embodiments may be obtained without one or more specific details, or through other methods, components, materials etc. In other cases, known structures, materials or operations are not shown or described in detail to avoid obscuring the various aspects of the embodiments.

Reference to "an embodiment" in this description indicates that a particular configuration, structure or characteristic described regarding the embodiment is included in at least one embodiment. Hence, expressions such as "in an embodiment", possibly present in various parts of this description do not necessarily refer to the same embodiment. Furthermore, particular configurations, structures or characteristics may be combined in any suitable manner in one or more embodiments.

References herein are used for facilitating the reader and thus they do not define the scope of protection or the range of the embodiments.

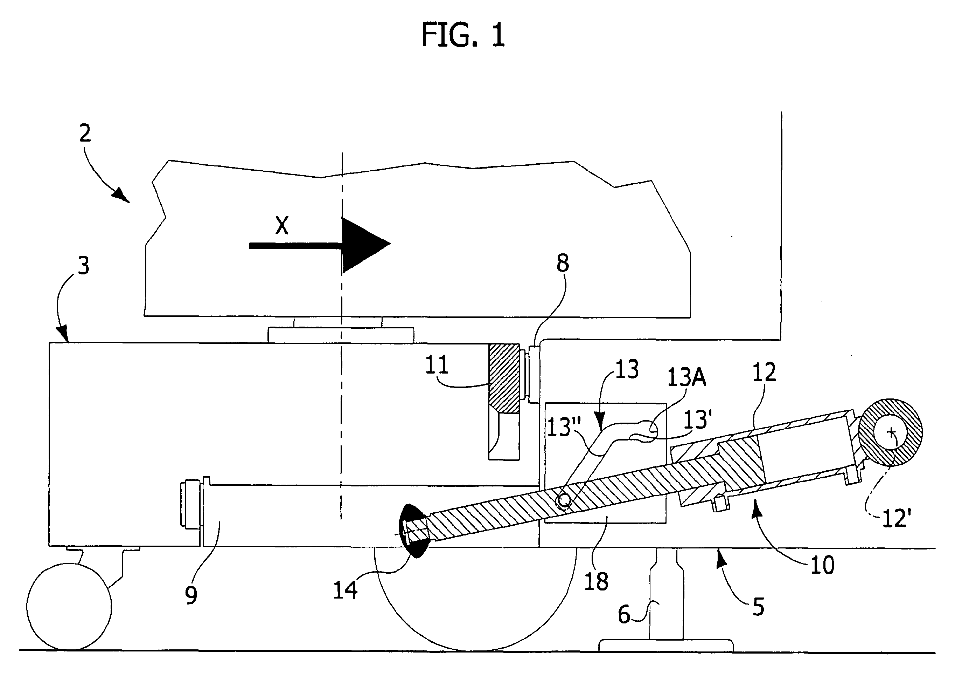

Referring to figure 1, a tank for a kneading machine is indicated with reference number 2. The tank 2 is mounted on an extractable carriage 3, which may be introduced and extracted respectively into and from the kneading machine, on the front side of the latter and according to a rectilinear motion substantially orthogonal to a general plane defined by such front side of the machine.

Specifically, the side of the kneading machine suitable to receive the tank 2 comprises a support structure 5 mounted on pedestals 6 and having abutment portions 8 suitable to cooperate with portions 9 of the carriage 3 to identify a predetermined position for receiving the tank. In various embodiments such abutment portions comprise conical coupling elements provided to be inserted into corresponding conical cavities of the carriage 3.

The kneading machine further comprises a coupling device 10 suitable to engage a seat 11 of the carriage 3, to block the tank 2 in engagement with the structure 5.

In various embodiments such coupling device comprises a linear actuator 12 mounted on the structure 5 of the kneading machine, free to oscillate around an axis 12', and suitable to acquire a first extracted configuration and a second retracted configuration. In various embodiments the actuator 12 oscillates in a plane parallel to the direction of introduction and extraction of the tank.

The device 10 also comprises at least one cam track 13 engaged by the actuator 12 and fixed onto the support structure 5 of the kneading machine. The track 13 defines a path such to cause the actuator 12 to oscillate each time it passes from the abovementioned first configuration to the abovementioned second configuration or vice versa.

Referring to the figures, the cam track 13 is contained in a plane substantially parallel to the oscillation plane of the actuator 12 and has, with reference to a direction moving away from the kneading machine, a first substantially horizontal rectilinear section 13' and a second inclined section 13". In various embodiments, the section 13" extends downwards.

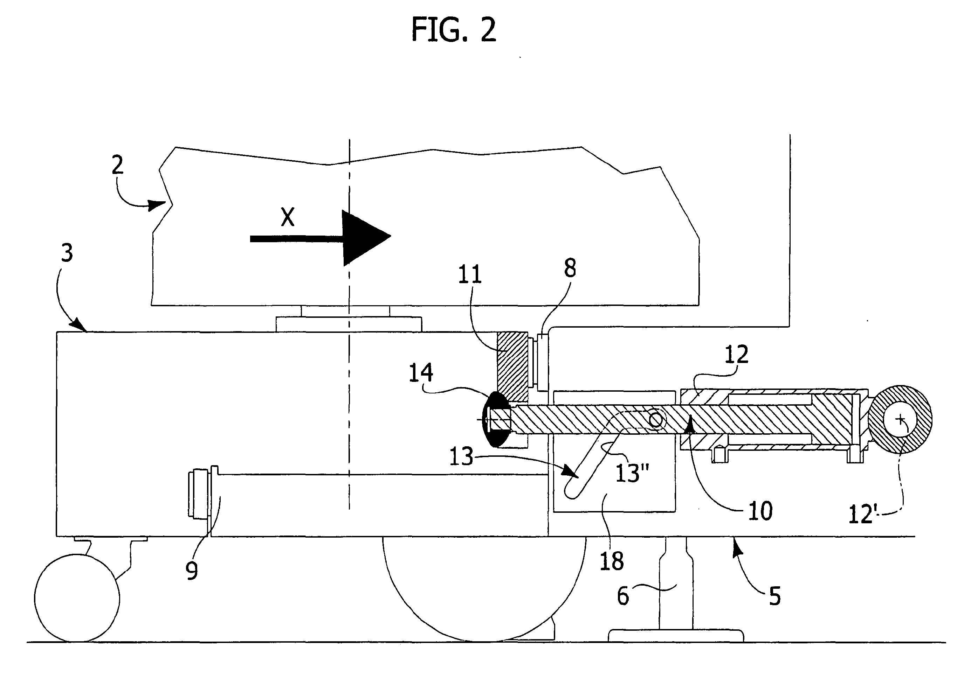

In various embodiments, the mutual arrangement between the actuator 12 and the cam track 13 is such that in the extracted configuration thereof the actuator 12 engages the section 13", while in the retracted configuration thereof it engages the section 13'. As observable in figures 1 and 2, the passage from such extracted configuration to such retracted configuration causes an upward oscillation movement of the actuator.

A coupling portion 14 suitable to engage the seat 11 of the carriage 3 is provided for at the end of the actuator 12. In various embodiments the mutually coupling parts of such portion 14 and seat 11 have corresponding half-spherical cap configurations, which are free to perform slight relative movements to compensate possible alignment imperfections between the same seat 11 and the actuator 12. For such purpose, the track 13 has a portion widened at the end 13A of the horizontal section, which allows the actuator 12 such slight movements when it engages such seat 11.

The method of operation of the device 10 is illustrated hereinafter.

In various embodiments, the operation described hereinafter is obtained by means of position sensors, suitable to determine the position at which the tank is located, and a control unit suitable to receive such signals and control the actuator 12 according to the same.

In various embodiments, such control unit is the same one the kneading machine is provided with for controlling kneading operations. In various embodiments such sensors are constituted by electromechanical or magnetic sensors.

In various embodiments, a semi-automatic actuation of the device, which provides for the direct intervention of the operator through a special user interface, for controlling the operations, may also be provided.

As previously mentioned, in the embodiment of figures 1-3, the introduction of the tank 2 into the kneading machine occurs according to a rectilinear advancement movement in direction X illustrated in figure 1, until the tank 2 is moved to the abovementioned reception position defined by the abutment elements 8 (illustrated in Figure 1).

During such movement, the coupling device 10 arranges the actuator 12 in the lowered condition illustrated in Figure 1, with the aim of avoiding any kind of interference between the actuator 12 itself and the carriage 3 of the tank.

Once the tank reaches such reception position, the actuator 12 is retracted and simultaneously raised, so as to engage the portion 14 with the seat 11 of the carriage. The engagement between the portion 14 and the seat 11 determines the blocking of the tank.

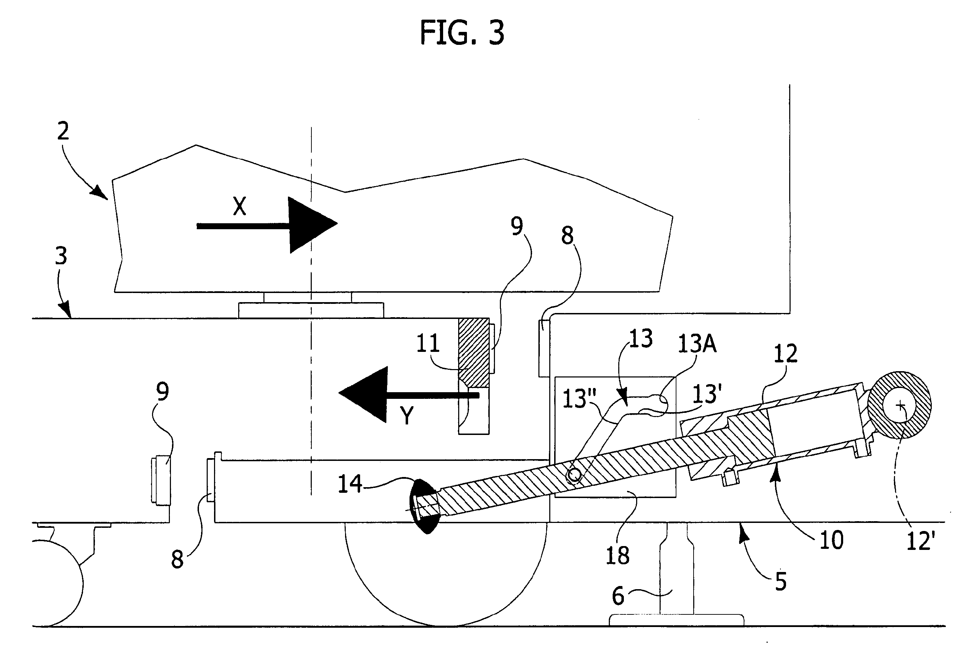

In order to uncouple and free the tank 2, the actuator 12 is - on the contrary - extended and simultaneously lowered thus disengaging the portion 14 from the seat 11 of the carriage 3. Once the actuator 12 is moved to the lowered position of figure 3, the tank may lastly be extracted according to direction Y illustrated in such figure.

Now, following is a description of the application of the coupling device 10 on a system or machine for producing dough characterised by a turntable structure, wherein a plurality of work stations are arranged in succession along a substantially circular trajectory and the tanks associated to such system are moved from one position to the other along the abovementioned succession. Each station of such system is provided with device 10 so as to temporarily block the tanks at a respective work position B and thus process the material contained therein.

In an embodiment, the means for moving the tanks the system is provided with, are suitable to move the tanks to the respective work stations, but only up to a position A located at a safe distance from the work position B, to avoid collisions between the tank and the structure of the station.

In the embodiment described hereinafter, the coupling device has the double function of moving the tank 2 from position A to the work position B and executing the coupling and blocking of the tank in question at the latter position.

Also in this case, the operation described hereinafter may be obtained with the help of position sensors, suitable to determine the position at which the tank is located, and a control unit suitable to receive such signals and control the actuator 12 as a function of the same.

In various embodiments, such control unit is the same one the kneading machine is provided with for controlling kneading operations. In various embodiments such sensors are constituted by electromechanical or magnetic sensors.

In various embodiments, a semi-automatic actuation of the device, which provides for the direct intervention of the operator through a special user interface, for controlling the operations, may also be provided for.

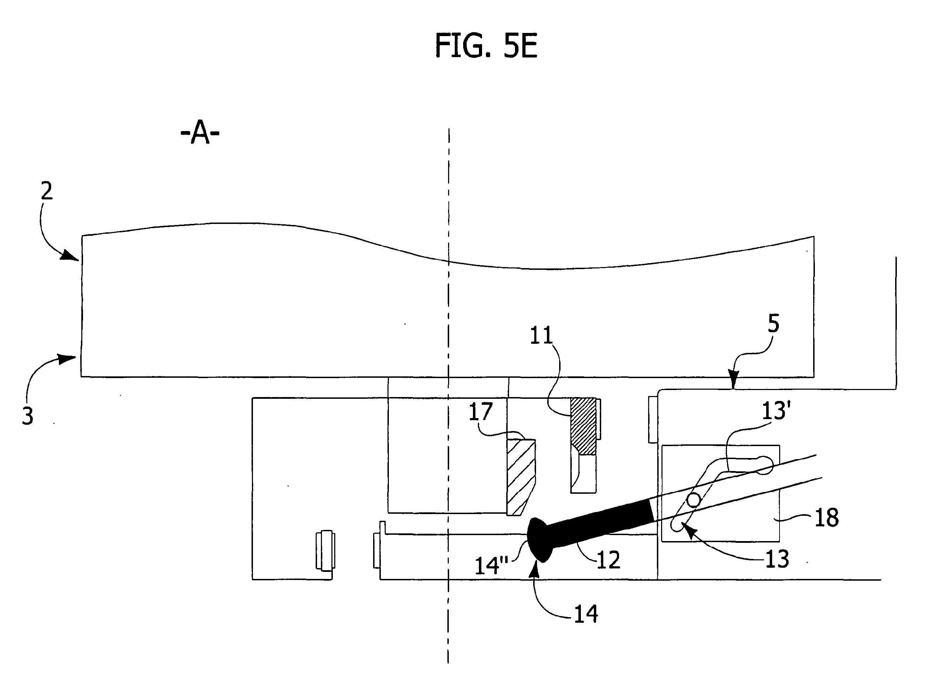

During the movement of the tank up to position A, obtained by the moving means of the system, the actuator 12 is at the lowered position illustrated in figure 5E, with the aim of avoiding any type of interference with the tank.

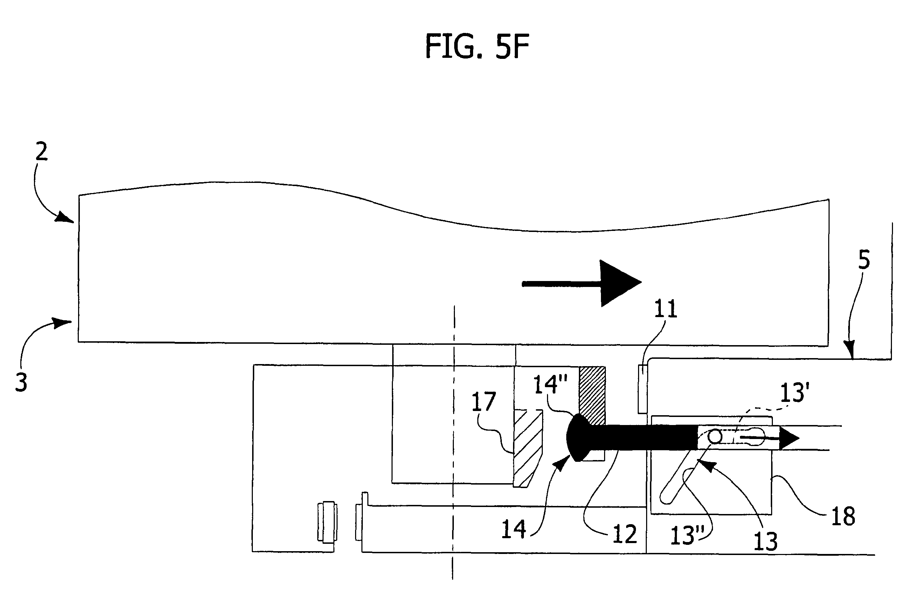

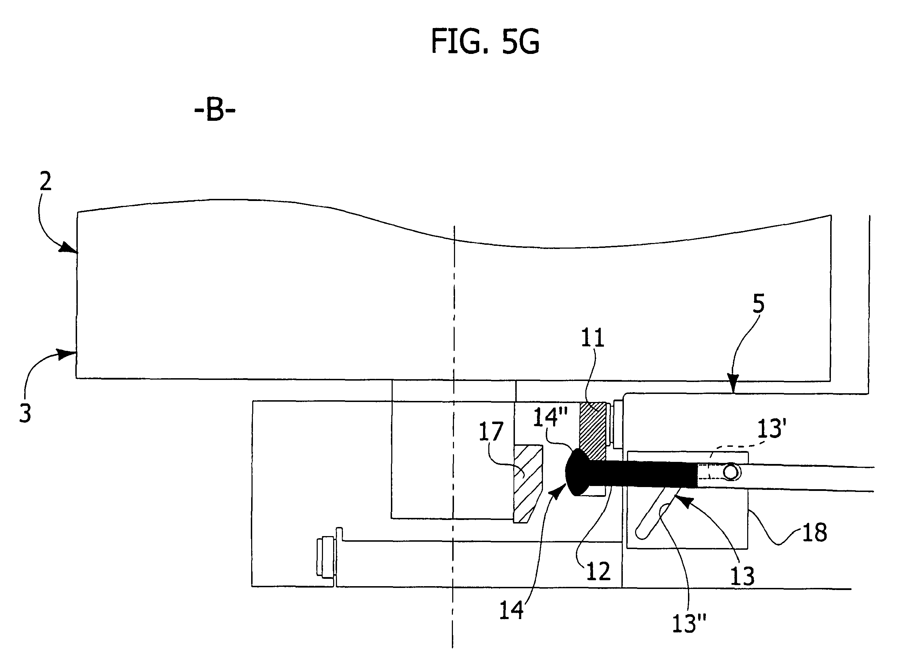

Once the tank reaches position A, still illustrated in figure 5E, the actuator 12 is thus raised and simultaneously retracted. In this case, as illustrated in figure 5F, when the portion 14 gets to contact with seat 11 of the carriage, the actuator 12 is still engaged with an initial portion of the horizontal section 13' and may thus shorten further bringing along with itself tank 2, up to moving it to the work position B. In the retracted configuration thereof, the actuator 12 blocks the tank 2 in the work position B (Figure 5G).

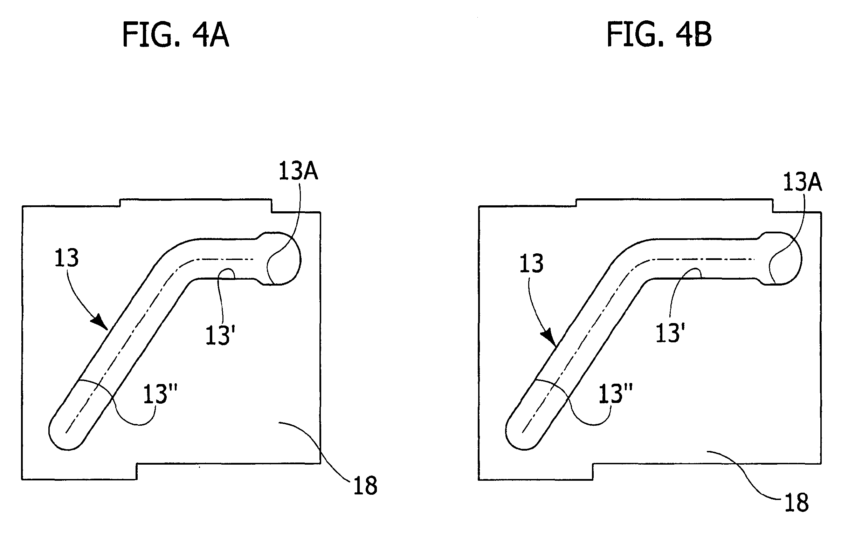

In various embodiments, the horizontal section of the cam track 13 is determined as a function of the distance between the previously indicated positions A and B (regarding this see figures 4A and 4B in which cam tracks 13 characterised by horizontal sections of different length are illustrated).

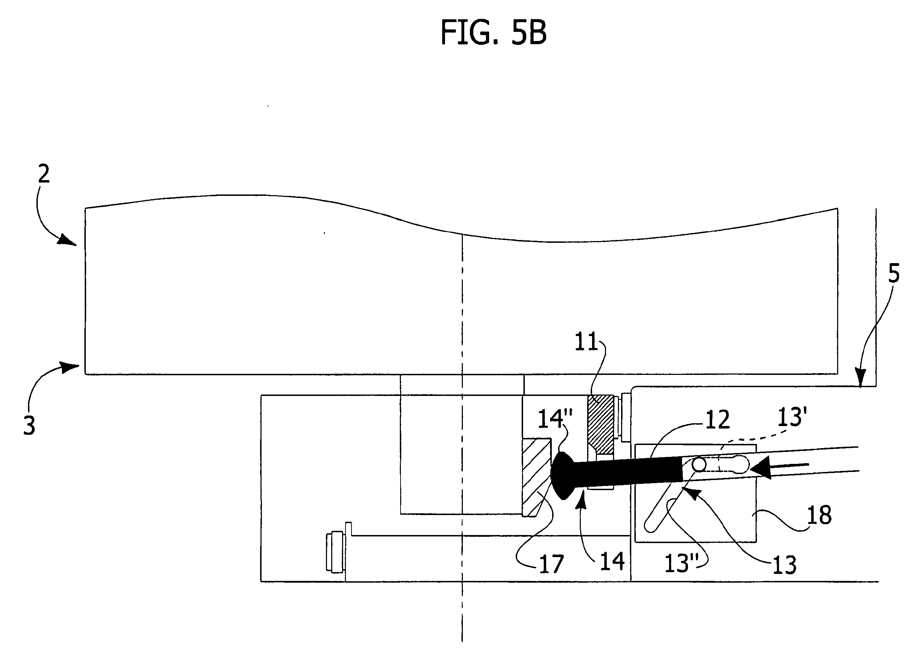

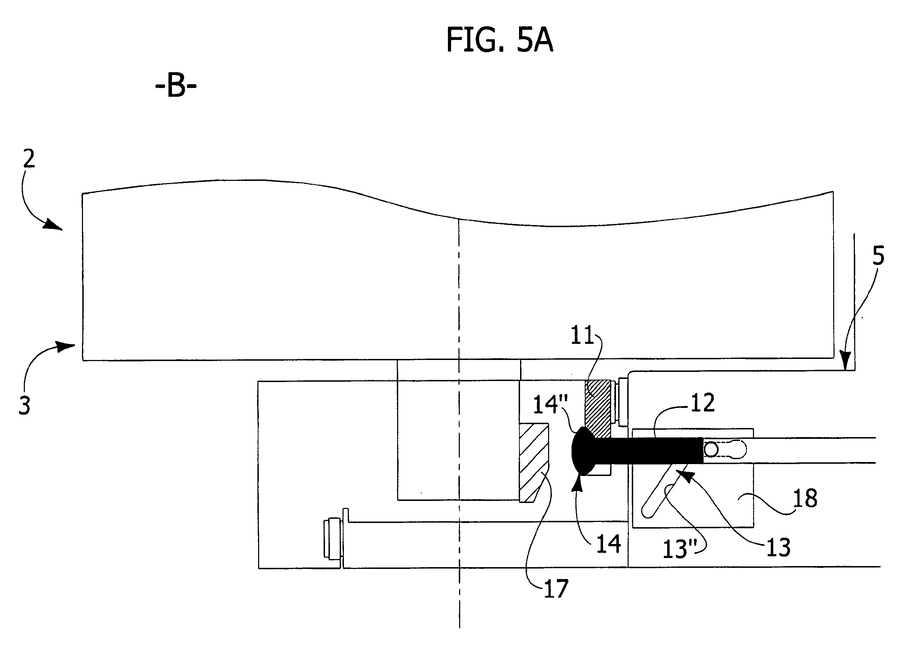

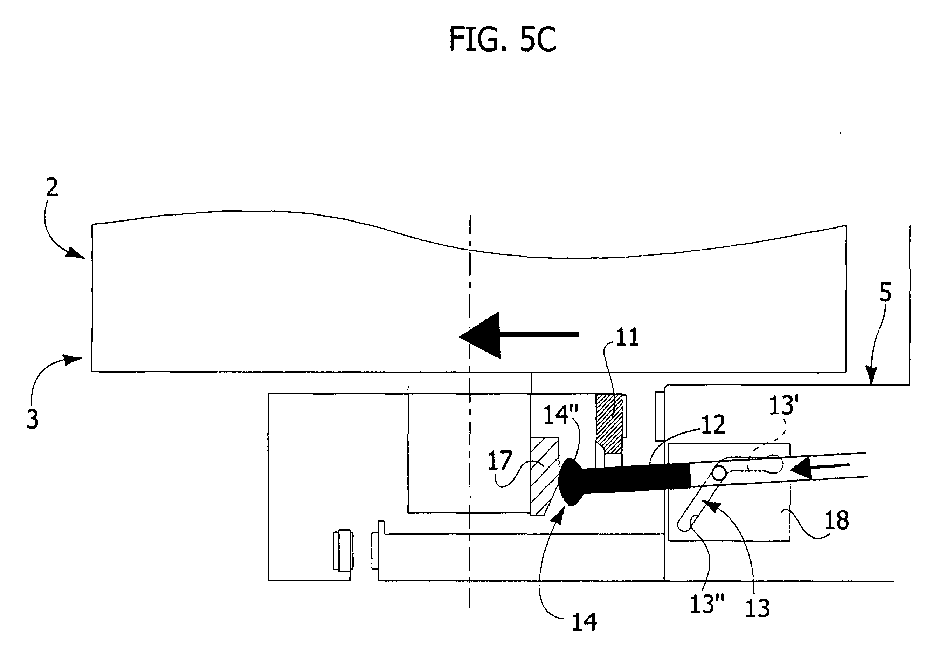

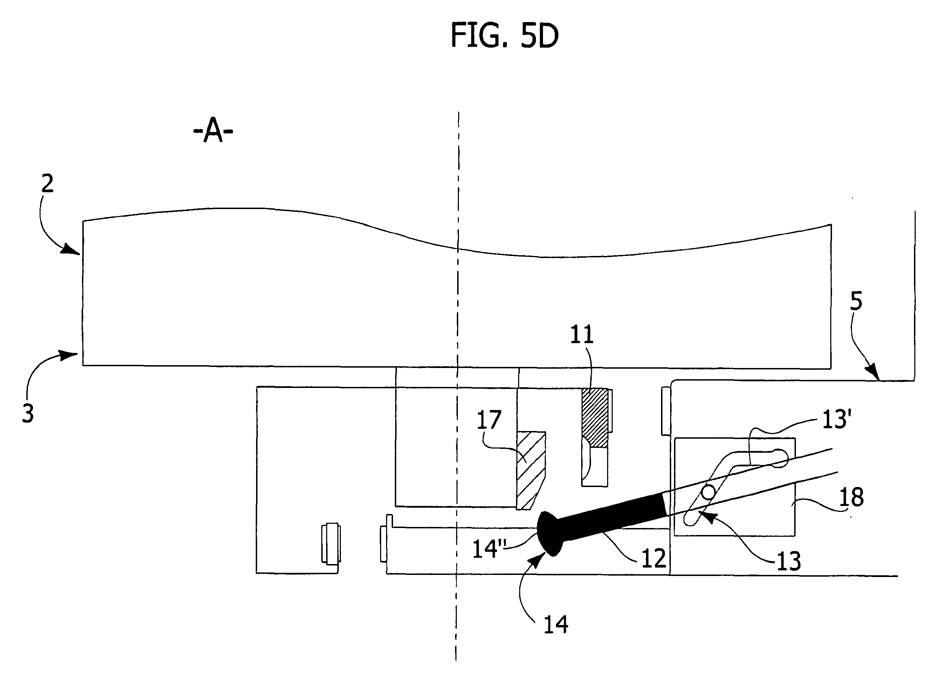

In order to uncouple and free the tank 2 from the work position (position B of figure 5A), the actuator 12 is - on the contrary - extended and simultaneously lowered to return to the position illustrated in figures 5D and 5E. In a first step (regarding this see figures 5A and 5B), when it engages the horizontal section of the track 13 and after the seat 11 is disengaged, the actuator 12 ends in abutment against an abutment element 17 of the carriage and pushes the latter towards position A (illustrated in Figure 5D). The cam track 13 is such that when the tank 2 is in proximity to position A the actuator 12 starts to engage the descending section of the cam track so as to be disengaged from the element 17 as soon as the tank 2 reaches such position. In various embodiments, as observable in figure 5C, the portion 14 has a front part 14" suitable to end in engagement with the abovementioned abutment element 17, which has a half-spherical cap configuration with the aim of providing, in the step in which the actuator 12 starts lowering and the portion 14 is still at contact with the element 17, a rolling action between the latter and the same element 17, limiting frictions between such parts to the maximum and above all avoiding sliding. In various embodiments, the element 17 is made of an antifriction material, for example nylon.

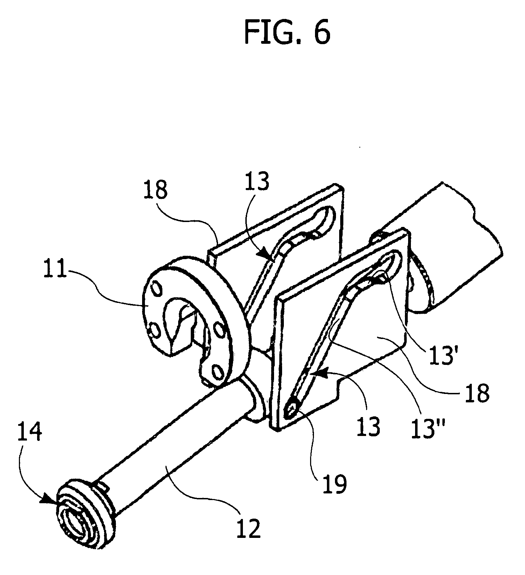

Figure 6 illustrates a preferred embodiment of the previously described coupling device 10. Such device comprises two plates 18 arranged facing each other and parallel to the oscillation plane of the actuator 12. Such plates each have, at mutually corresponding positions, the cam track 13, with which the actuator 12 is engaged at an intermediate zone thereof, through respective opposite radial pins 19. In various embodiments, the actuator 12 is constituted by a double-effect hydraulic cylinder.

Naturally, without prejudice to the principle of the invention, the details and embodiments may vary, even significantly, with respect to what has been described and illustrated purely by way of non-limiting example, without departing from the scope of the invention, as defined in the attached claims.

## Claims

1. Kneading machine comprising an extractable tank (2) and a device (10) for coupling said tank,
wherein said coupling device comprises a linear actuator (12),
wherein said actuator is mounted oscillating on a support structure of said machine and it is adapted to acquire a first angular position, at the extracted condition thereof, and a second angular position, at a retracted condition thereof, **characterised in that** said linear actuator is adapted to engage a corresponding seat (11) of said tank and said device comprises a cam track (13) engaged by said linear actuator, said cam track defining a path such to cause said actuator to perform an oscillation movement from said first angular position to said second angular position when said actuator passes from said extracted condition to said retracted condition.

2. Machine according to claim 1 , **characterised in that** said first position is a lowered position.

3. Machine according to any one of claims 1-2, **characterised in that** said cam track has a substantially horizontal portion (13') which said actuator engages when it is in said retracted condition, and an inclined portion (13") which said actuator engages when it is in said extracted condition.

4. Machine according to claim 3, **characterised in that** said inclined portion extends downwards with respect to said substantially horizontal portion.

5. Machine according to claim 1, **characterised in that** said coupling device comprises two plates (18) arranged facing each other and parallel to the oscillation plane of said actuator, each having, at mutually corresponding positions, said cam track.

## Patentansprüche

1. Knetmaschine mit extrahierbarem Behälter (2) und einer Vorrichtung (10) zum Ankoppeln dieses Behälters, wobei die Kopplungsvorrichtung einen Linearaktuator (12) aufweist,
**dadurch gekennzeichnet, dass** der Linearaktuator in der Lage ist, in eine entsprechende Aufnahme (11) des Behälters einzugreifen,
wobei der Aktuator verschwenkbar auf einer Stützstruktur der Maschine gelagert und in der Lage ist, im ausgefahrenen Zustand eine erste Winkelstellung und im zurückgezogenen Zustand eine zweite Winkelstellung einzunehmen, und dass die Vorrichtung eine von dem Linearaktuator beaufschlagte Nockenbahn (13) aufweist, wobei die Nockenbahn eine derart gestaltete Bahn definiert, dass der Aktuator veranlasst wird, eine Schwenkbewegung von der ersten Winkelstellung zu der zweiten Winkelstellung auszuführen, wenn der Aktuator von dem ausgefahrenen Zustand in den zurückgezogenen Zustand übergeht.

2. Maschine nach Anspruch 1, **dadurch gekennzeichnet, dass** die erste Stellung eine niedrigere Stellung ist.

3. Maschine nach einem der Ansprüche 1 bis 2, **dadurch gekennzeichnet, dass** die Nockenbahn einen im Wesentlichen horizontalen Abschnitt (13') aufweist, welchen der Aktuator in seinem zurückgezogenen Zustand beaufschlagt, und einen geneigten Abschnitt (13") aufweist, welchen der Aktuator in seinem ausgefahrenen Zustand beaufschlagt.

4. Maschine nach Anspruch 3, **dadurch gekennzeichnet, dass** sich der geneigte Abschnitt hinsichtlich des im Wesentlichen horizontalen Abschnittes nach unten erstreckt.

5. Maschine nach Anspruch 1, **dadurch gekennzeichnet, dass** die Kopplungsvorrichtung zwei einander gegenüberliegende und parallel zu der Schwenkebene des Aktuators verlaufende Platten (18) aufweist, welche in jeweils entsprechenden Positionen die Nockenbahn aufweisen.

## Revendications

1. Malaxeuse comprenant un réservoir pouvant être extrait (2) et un dispositif (10) pour accoupler ledit réservoir,
dans lequel ledit dispositif d'accouplement comprend un actionneur linéaire (12),
dans lequel ledit actionneur est monté de façon oscillante sur une structure de support dudit pétrin et il est adapté pour prendre une première position angulaire, dans la condition extraite de celui-ci, et une seconde position angulaire, dans une condition rétractée de celui-ci, **caractérisée en ce que** ledit actionneur linéaire est adapté pour entrer en prise avec un siège correspondant (11) dudit réservoir et dans lequel ledit dispositif comprend une piste de came (13) avec laquelle ledit actionneur linéaire entre en prise, ladite piste de came définissant un trajet afin de faire en sorte que ledit actionneur réalise un mouvement d'oscillation de ladite première position angulaire à ladite seconde position angulaire lorsque ledit actionneur passe de ladite condition extraite à ladite condition rétractée.

2. Malaxeuse selon la revendication 1, **caractérisée en ce que** ladite première position est une position abaissée.

3. Malaxeuse selon une quelconque des revendications 1 à 2, **caractérisée en ce que** ladite piste de came comporte une partie sensiblement horizontale (13') avec laquelle ledit actionneur entre en prise lorsqu'il est dans ladite condition rétractée, et une partie inclinée (13") avec laquelle ledit actionneur entre en prise lorsqu'il est dans ladite condition extraite.

4. Malaxeuse selon la revendication 3, **caractérisée en ce que** ladite partie inclinée s'étend vers le bas par rapport à ladite partie sensiblement horizontale.

5. Malaxeuse selon la revendication 1, **caractérisée en ce que** ledit dispositif d'accouplement comprend deux plaques (18) agencées de façon opposée l'une à l'autre et parallèles au plan d'oscillation dudit actionneur, chacun possédant, dans des positions mutuellement correspondantes, ladite piste de came.
